# EUROPÄISCHE PATENTANMELDUNG

(11) **EP 0 917 847 A1**
(43) Veröffentlichungstag der Anmeldung: **26.05.1999**
(21) Anmeldenummer: 97120296.5
(22) Anmeldetag: 19.11.1997
(51) Int. Cl.: A47J 36/02

(54) **Wok-Pfanne**

(71) Anmelder: Therma Grossküchen Produktion AG, 6210 Sursee (CH)
(72) Erfinder: Gähler, Max, Centralstrasse 43, 6210 Sursee (CH)
(74) Vertreter: Herrmann-Trentepohl, Werner, Dipl.-Ing.

(57) **Zusammenfassung**

Die Erfindung betrifft eine Wok-Pfanne (1) mit einem ferromagnetischen Grundkörper (G) und einer den Grundkörper (G) bedeckenden korrisionsbeständige Beschichtung (B) aus Hartchrom mit einer PTFE-Einbettung. Die Beschichtung (B) hat eine Dicke von 20 - 30 µm und die Dicke des Grundkörpers (G) beträgt ca. 1 mm.

## Beschreibung

Die Erfindung betrifft eine Wok-Pfanne, insbesondere für Induktionskochgeräte, Gas- und/oder Elektrizitätskochgeräte, die zur Zubereitung insbesondere fernöstlicher Gerichte in neuerer Zeit vermehrt auch in der Großküche Verbreitung findet.

Die Wok-Pfanne als herkömmliches Kochgefäß der asiatischen Küche besteht aus einem halbkugeligen Topf aus Metall mit angearbeitetem Griffstiel. In modernen Küchen kommt als Wärmequelle oft noch eine Gaskochstelle in Frage, um die Wok-Pfanne von unten mit der Gasflamme zu erhitzen. Hierzu sind auch geeignete Halterungen entwickelt worden, um die Wok-Pfanne über der Gasflamme sicher absetzen zu können.

Aus der EP 0 629 820 ist ein Induktionskochgerät für eine Wokpfanne bekannt, bei welchem die Halterung für die Wokpfanne aus einer Küvette in Form einer nach oben offenen Kugelkalotte zur Aufnahme der Wok-Pfanne besteht, wobei die Heizeinrichtung als elektrische Induktionsheizung ausgebildet ist.

Die kugelkalottenförmige Küvette ist mit ihrer Innenfläche auf die Form der Wok-Pfanne abgestimmt, die damit so in die Küvette eingesetzt werden kann, daß einerseits die Induktionswärme verlustfrei in die Wok-Pfanne übertragen wird, andererseits die Wok-Pfanne sich noch bewegen läßt. Unterhalb der Küvette liegen um deren Wandung Induktionsspulen, die über einen Elektrogenerator versorgt werden. Das magnetische Induktionsfeld erhitzt in gleicher Weise wie ein Gasbrenner das eisenhaltige Material des Wok, so daß sich in der Zubereitung der Speisen kein Unterschied ergibt. Das Induktionsfeld kann ebenso wie eine Flamme abgeschaltet und in der Intensität geregelt werden, so daß auch insoweit kein Unterschied vorhanden ist.

Dieses Gerät hat sich an sich bewährt, verbesserungswürdig erscheint jedoch die WOK-Pfanne an sich, da Gargut an Eisen oder Stahl leicht anhaftet. Zwar sind neben den gußeisernen WOK-Pfannen auch mehrschichtige WOK-Pfannen bekannt, insbesondere mit Beschichtungen aus plattiertem Material. Diese sind jedoch für Induktionskochgeräte in dem Sinne nachteilhaft, daß eine geringere Leistungsübertragbarkeit sowie ein Ankleben des Kochgutes im Falle der Verwendung von Fleisch vorhanden ist. Bekannt sind bereits Pfannen aus mehrschichtig plattierten Werkstoffen, wobei die Schichten als dick bezeichnet werden können, nämlich mit einer Stärke von 0.5 - 1 mm. Wenn die unterste Schicht einer solchen Pfanne aus rostfreiem Material ist, dann ist der Induktionserwärmungseffekt im Falle einer Verwendung eines Induktionskochgerätes vergleichsweise schlecht, da die Eindringtiefe des Induktionsmagnetfeldes in das Metall der untersten Schicht zumeist nur wenige Zehntelmillimeter beträgt.

Die Erfindung hat daher die Aufgabe, eine für ein Induktionsheizgerät, Gasheizgerät oder Elektrizitätsheizgerät geeignete WOK-Pfanne zu schaffen, an der das Gargut nicht oder nur sehr wenig haften bleibt. Gleichzeitig soll der Wirkungsgrad der Pfanne erhöht werden und die Pfanne eine maximale Energieausbeute ermöglichen.

Die Erfindung löst diese Aufgabe durch den Gegenstand des Anspruches 1. Erfindungsgemäß weist die Wok-Pfanne damit einen ferromagnetischen Grundkörper und eine den Grundkörper bedeckende korrisionsbeständige Beschichtung auf.

Dies hat den besonderen Vorteil, daß das am besten geeignete Material für die Induktion verwendet wird (vorzugsweise Eisen, Gußeisen oder Stahl) und damit ein größtmöglicher Wirkungsgrad bei einer maximalen Energieausnutzung erreicht wird.

Die ergänzende korrisionsbeständige Beschichtung schützt die Pfanne vor Rost und ist porenfrei. Vorzugsweise besteht die Beschichtung aus Chrom oder Hartchrom, zweckmäßig mit einer PTFE-Einbettung. Die Hartchromschicht ist sehr hart und dabei porenfrei, so daß Gargut nur schwer anhaftet. Aus der Härte dieser Schicht ergibt sich ferner der Vorteil, daß eine Reinigung der Pfanne mit scharfen Putzmitteln (z.B. mit einem Geflecht aus Edelstahlspiralen) möglich ist. Reine Eisenpfannen zerkratzen dagegen sehr leicht und sind daher unhygienischer. Mit der Erfindung verbunden ist ferner der Vorteil, daß keine Geschmacksübertragung in Form eines Eisengeschmacks in den Lebensmitteln bzw. dem Kochgut von der WOK-Pfanne auf das Kochgut erfolgt.

Ein weiterer Vorteil der Hartchromschicht ist darin zu sehen, daß die Wärmeabstrahlung der leeren oder vom Kochgut freien Zonen wesentlich niedriger ist als bei einer 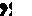 schwarzen" Oberfläche. Daraus resultieren ein niedrigerer Energiebedarf und weniger Wärmeabstrahlung, d. h. eine geringere Hitzeeinwirkung auf das Personal und die Küche.

Vorzugsweise beträgt die Dicke des Grundkörpers ca. 1mm und die Dicke der Beschichtung 20 - 30µm. Auch durch diese extrem dünne Auslegung der Beschichtung unterscheidet sich die erfindungsgemäße Pfanne erheblich von den sonst milimeterdicken Beschichtungen 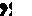 normaler" Töpfe und Pfannen; sie führt zu einer maximalen Effizienz. Eine zusätzliche Einbettung von PTFE (TEFLON) in die Chromschicht verstärkt die Antihaftwirkung der Hartchrombeschichtung.

Weitere vorteilhafte Ausgestaltungen der Erfindung sind den übrigen Unteransprüchen zu entnehmen.

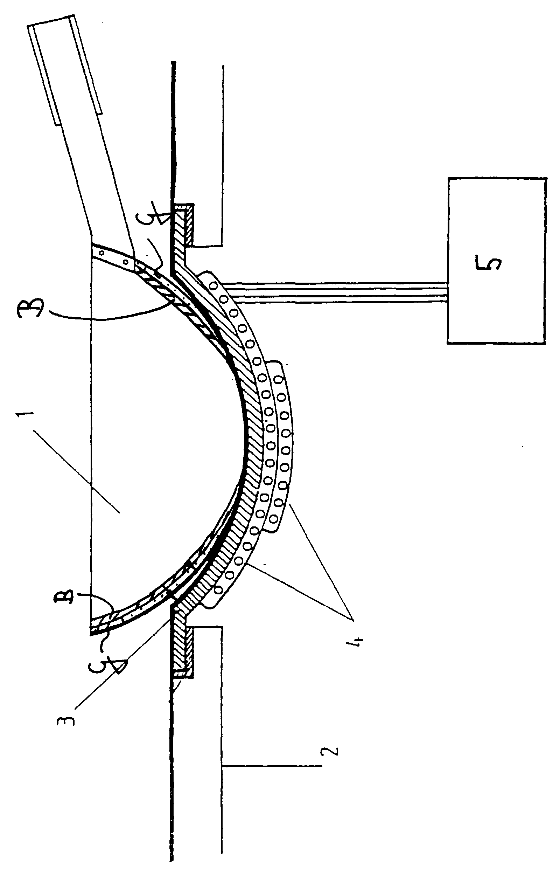

Die Zeichnung zeigt als Beispiel eine erfindungsgemäße WOK-Pfanne und ein zugehöriges Induktions-Kochgerät im Schnitt.

Die Wok-Pfanne 1 bildet ein halbkugeliges Gefäß mit einem stielartigen Griff. Die Gefäßwandung besteht aus einem Eisengrundkörper G (1mm) und einer Beschichtung B aus Hartchrom (ca. 20 - 30 µm). Die Beschichtung ist hier nur auf der Pfanneninnenseite aufgebracht, kann aber vorteilhaft auch an der Außenseite vorgesehen sein, was die Reinigung erleichtert, was bewirkt, daß die Wärmeabstrahlung aller leeren oder von Kochgut freien Zonen wesentlich niedriger als bei schwarzen Oberflächen ist, so daß dadurch ein geringerer Energiebedarf erreicht wird und das Küchenpersonal weniger Hitzeeinwirkung ausgesetzt ist. Die Beschichtung führt zu verbesserten Kochergebnissen und zu leichterer Handhabung, insbesondere auch im Großküchenbetrieb. Es ergibt sich damit quasi erstmals eine wirklich zufriedenstellende Eingliederung der 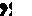 WOK-Kochtechnik" in den modernen Großküchenbetrieb.

Zur Aufnahme des Gefäßes dient in bekannter Weise eine Küvette 2 aus einem Material wie beispielsweise Glas, PTFE, Glaskeramik, usw. in Form einer Kugelkalotte, von der der Wok mit seinem unteren Teil aufgenommen wird. Die Küvette 2 ist in die Oberfläche eines Kochfeldes oder eines Tischgerätes in der dargestellten Weise eingepaßt.

Wie aus der Zeichnung ersichtlich, weisen die Außenfläche der Wok-Pfanne 1 und die Innenfläche der Küvette 3 nicht denselben Krümmungsradius auf, sondern die Küvette ist mit einem größeren oder kleineren Radius gekrümmt als die Wok-Pfanne. Infolge dieser Größenverhältnisse läßt sich die Wok-Pfanne in der Küvette drehen und schwenken, um das darin befindliche Kochgut zu bewegen und zu mischen. Da die Energieübertragung induktiv erfolgt, ist eine vollständige flächige Anlage nicht erforderlich.

An der Unterseite der Küvette 2 befinden sich Induktionsspulen 4, die von einem Elektrogenerator 5 mit Energie versorgt werden. In dem dargestellten Ausführungsbeispiel sind zwei Lagen von Induktionsspulen 4 vorgesehen, von denen die untere Lage nur dem mittleren bzw. unteren Bereich der Wok-Pfanne Wärmeenergie zuführt, in dem sich das meiste Kochgut befindet. Derselbe Effekt läßt sich erreichen, wenn anstelle der zweiten Lage oder auch zusätzlich dazu die unmittelbar an der Unterseite der Küvette anliegende Induktionsspule in der Weise spiralförmig verläuft, daß die Windungen in der Mitte dichter aneinanderliegen als in den Außenbereichen.

## Patentansprüche

1. Wok-Pfanne (1), insbesondere für Induktionskochgeräte, Gaskochgeräte oder Elektrizitätskochgeräte, **gekennzeichnet durch** einen ferromagnetischen Grundkörper (G) und eine den Grundkörper (G) bedeckende korrisionsbeständige Beschichtung (B).

2. Wok-Pfanne nach Anspruch 1, Kochgerät nach Anspruch 1, **dadurch gekennzeichnet, daß** der Grundkörper (G) aus Eisen, Stahl oder Gußeisen besteht.

3. Wok-Pfanne nach Anspruch 2, Kochgerät nach Anspruch 1**, dadurch gekennzeichet, daß** der Grundkörper (G) aus Stahl besteht.

4. Wok-Pfanne nach einem der vorstehenden Ansprüche, **dadurch gekennzeichnet, daß** die Beschichtung (B) aus Hartchrom besteht.

5. Wok-Pfanne nach einem der vorstehenden Ansprüche, **dadurch gekennzeichnet, daß** die Beschichtung (B) aus Hartchrom mit einer PTFE-Einbettung besteht.

6. Wok-Pfanne nach einem der vorstehenden Ansprüche, **dadurch gekennzeichnet, daß** die Beschichtung (B) auf der WOK-Innenseite angebracht ist.

7. Wok-Pfanne nach einem der vorstehenden Ansprüche**, dadurch gekennzeichnet, daß** die Beschichtung (B) auf der gesamten Oberfläche des WOKs angebracht ist.

8. Wok-Pfanne nach einem der vorstehenden Ansprüche, **dadurch gekennzeichnet, daß** die Beschichtung (B) eine Dicke von 20 - 30 µm aufweist.

9. Wok-Pfanne nach einem der vorstehenden Ansprüche, **dadurch gekennzeichnet, daß** die Dicke des Grundkörpers (G) ca. 1mm beträgt.
